(19)

**Europäisches Patentamt**

**European Patent Office**

**Office européen des brevets**

(11) **EP 3 755 994 B1**

(12) **EUROPEAN PATENT SPECIFICATION**

(45) Date of publication and mention
of the grant of the patent:
**26.05.2021 Bulletin 2021/21**

(21) Application number: **18713384.8**

(22) Date of filing: **21.02.2018**

(51) Int Cl.:
*G01N 21/64* (2006.01)     *G06T 7/00* (2017.01)

(86) International application number:
**PCT/SI2018/050007**

(87) International publication number:
**WO 2019/164455 (29.08.2019 Gazette 2019/35)**

(54) **IMAGE-PROCESSING APPARATUS AND IMAGE-PROCESSING METHOD FOR DETECTION OF IRREGULARITIES IN TISSUE**

BILDVERARBEITUNGSVORRICHTUNG UND BILDVERARBEITUNGSVERFAHREN ZUR ERKENNUNG VON UNREGELMÄSSIGKEITEN IN GEWEBE

APPAREIL DE TRAITEMENT D'IMAGE ET PROCÉDÉ DE TRAITEMENT D'IMAGE POUR LA DÉTECTION D'IRRÉGULARITÉS DANS UN TISSU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.12.2020 Bulletin 2020/53**

(73) Proprietor: **Optotek d.o.o.**
**1000 Ljubljana (SI)**

(72) Inventors:
• **STRANCAR, Janez**
**2341 Limbus (SI)**
• **PODLIPEC, Rok**
**4274 Zirovnica (SI)**
• **URBANCIC, Iztok**
**1231 Ljubljana - Crnuce (SI)**
• **ARSOV, Zoran**
**1351 Brezovica Pri Ljubljani (SI)**
• **VRECKO, Andrej**
**1000 Ljubljana (SI)**

(74) Representative: **Patentni Biro AF d.o.o.**
**Kotnikova 32, p.p. 2706**
**1001 Ljubljana (SI)**

(56) References cited:
**WO-A1-99/16353**     **WO-A1-2013/109966**
**WO-A1-2015/127296**     **US-B1- 6 276 798**

**Description**

Field of the invention

The present invention belongs to the field of investigating materials by determining their physical properties, more precisely to the field of investigating and analysing materials by use of optical means. The invention relates to a method for detection of irregularities in an eye based on measured auto-fluorescence signal of lipofuscin. The invention also concerns an ophthalmic apparatus performing the said method.

Background of the invention and the technical problem

Lipofuscin is a yellow-brown fluorescent pigment that accumulates with age in the liver, kidney, heart muscle, retina, adrenals, nerve cells, and ganglion cells. It can be found as pigment granules composed of lipid-containing residues of lysosomal digestion. Lipofuscin does not degrade, most probably due to its unusual structures, which are not amenable to degradation. Consequent accumulation of lipofuscin is one of the most characteristic features of ageing observed in the eye, more particularly in retinal pigment epithelial (RPE) cells. The retinal pigment epithelium (RPE) is the pigmented cell layer with melanin located just outside the retina that nourishes retinal visual cells and it is firmly attached to the underlying choroid and overlying retina. The RPE is a phagocytic system that is essential for renewal of photoreceptors. Each photoreceptor has an inner and outer segment with disks stacked like a roll of coins. The disks are necessary for the conversion of light into electrical potentials and the spent disks are shed from their outer segments and degraded within the RPE. Most of these disks appear to be degraded quickly in RPE cells of young healthy individuals. However, with time, incompletely degraded membrane material builds up in the form of mainly lipofuscin.

The lipofuscin found in RPE cells differs from that of other body tissues due to the fact that it is mainly derived from the chemically modified residues of incompletely digested photoreceptor outer segments. It is a heterogeneous material composed of mixture of lipids, proteins, and different fluorescent compounds. Although its exact composition is not known, bis-retinoids constitute a major component with N-retinylidene-N-retinylethanolamine being the most prominent and best characterized. Lipofuscins are autofluorescent possibly due to Schiff bases formed by reactions between carbonyls and amino compounds.

It is well known that the major source of fundus autofluorescence (FAF) is the lipofuscin of RPE cells accompanied with minor contribution of other endogenous fluorophores such as advanced glycation end products (AGE) and collagen (Schweitzer et al., Microsc. Res. Tech. 70(5), 410-419, 2007). Under any excitation wavelength ranging from 360 to 647 nm, lipofuscins appear as irregular granules that emit yellow-orange fluorescence between 500 and 640 nm as described in Eldred et al. (1982; Science 216 (4547): 757-759), Eldred and Katz, (1988; Exp Eye Res 47(1):71-86), Sohal and Brunk (1989; Adv Exp Med Biol. 266:17-26) and Delori (1995, Invest. Ophthalmol. Vis. Sci. 36(3), 718-729). Quantification of lipofuscin based on FAF is known.

The excessive lysosomal accumulation of lipofuscin in RPE, which impedes cell metabolic activity, is a sign of ageing or pathological conditions, including age-related macular degeneration (AMD), Alzheimer disease and Parkinson disease. Lipofuscin is also implicated in disease processes underlying dominant Stargardt-like macular degeneration, and Best's vitelliform macular dystrophy (BVMD).

All of the aforementioned diseases start with neovascularization, the abnormal blood vessels growth, and are the most common cause of moderate to severe vision loss (Campochiaro, J Mol Med. 91 (3), 311-321, 2013). The leading causes of blindness are AMD affecting central vision and diabetic retinopathy (DR) affecting larger field of view. Treatment of retinal and choroidal diseases by inhibiting neovascularization has thus become one of the main priorities in ophthalmology (Schmidt-Erfurth et al. Br. J. Ophthalmol. 98 (9), 1144-1167, 2014). Various techniques have been established, such as antivascular endothelial growth factor therapy (anti-VEGF), pan-retinal photocoagulation therapy (PRT), photodynamic therapy (PDT) and focal or targeted retinal photocoagulation (TRP).

Since the treatment protocols of the laser induced therapies are based on the diagnosed local pathologies, the identification of the pathological region by quantifying the extent of neovascularization is of extreme importance. However, the conventional techniques such as optical coherence tomography (OCT), scanning laser ophthalmoscopy (SLO) and fundus autofluorescence imaging (FAF) meet various limitations and cannot provide the exact retinal conditions. For example, diagnostic accuracy of FAF method exploiting lipofuscin autofluorescence to identify local pathologies was currently found inconclusive (Frampton et al., Health Technol Assess. 2016 20(31):1-108).

It is obvious that during inspection of eyes it would be beneficial if information about bleeding state or presence of blood outside blood vessels was available to medical personnel. Presence of blood vessel leakage can be understood as one sign of pathology and a method for detecting such signs would significantly improve diagnosis and treatment of ocular diseases. Hence, it is the aim of the present invention to provide a method for detection of irregularities based on measured alterations in the autofluorescence spectra of (mainly) lipofuscin that will map areas with blood leakage, thereby providing simple interpretation of results and improve further diagnostics. It is a further aspect of the invention to provide an ophthalmic device performing the said method.

State of the art

Currently known autofluorescence (FAF) methods and their results as recently reviewed by Frampton et al. (2017, Eye, doi: 10.1038/eye.2017.19) do not provide decisive clinical information, as there may be difficulties with sensitivity and specificity of FAF imaging. The article also points out that in quantification of FAF it should be determined and agreed which are the thresholds for increased or decreased FAF indicating hypo- and hyper-auto-fluorescence. The analysed FAF methods do not employ additional computation of results similar to the present invention.

Besides FAF, new imaging technique, volumetric angiographic information of retinal and choroidal layers (OCT) angiography was developed to identify potential microvascular abnormalities in diabetic eyes but lacking the ability to show blood leaking spots accompanied with additional tendency for image artefacts (Chalam et al., J Ophthalmic Vis Res. 11, 84-92, 2016), all of which is resolved in the present invention.

New method, fluorescence lifetime imaging ophthalmoscopy (FLIO) has been developed for early diagnosis of neovascularization originating diseases such as AMD and DR by measuring changes in relative contribution of fluorophores in retina as described in Schweitzer et al. (Microsc. Res. Tech. 70(5), 410-419, 2007) and Dysli et al. (Prog. Ret. Eye Res.60, 120-143, 2017). However, the method cannot recognize the early blood leakage spots, which is resolved in the present invention.

Document US6276798 discloses a spectral bio-imaging method for enhancing pathologic, physiologic, metabolic and health related spectral signatures of an eye tissue, the method comprising the steps of (a) providing an optical device for eye inspection being optically connected to a spectral imager; (b) illuminating the eye tissue with light via the iris, viewing the eye tissue through the optical device and spectral imager and obtaining a spectrum of light for each pixel of the eye tissue; and (c) attributing each of the pixels a colour or intensity according to its spectral signature, thereby providing an image enhancing the spectral signatures of the eye tissue. The method according to this document does not take into account melanin absorption and does not analyse or detect blood outside blood vessels.

Document US2016106311 describes a system and method are for analysing fluorescence of fluorophores in an eye using a non-negative matrix factorization (NMF) method. The NMF method may be initialized with Gaussian mixture model fits and may optionally be constrained to provide identical abundance images for data obtained in response to two or more excitation wavelengths. This a numerical method decomposes spectra using Gaussian fits, which may not be the most suitable as will be discussed in continuation. Although, it is mentioned that haemoglobin oxygenation could be measured using this method in hyperspectral reflectance mode to monitor response to treatment of disorders, the decomposition into Gaussian peak does not directly correlate to any specific fluorescent or absorbing species. Namely, many of these components identified with these methods do not correspond directly to molecular species such as lipofuscin, melanin or haemoglobins.

Document CA2951075 relates to the multispectral imaging of samples, in particular of biological tissues. The invention further relates to a method for acquisition of fluorescence and reflectance images of an object comprising the steps of alternatingly illuminating the object with at least a first light having several spectral regions of high intensity, wherein the first light has at least one region of low intensity that is of longer wavelength to a region of high intensity, and at least a second light having at least one spectral region of high intensity, recording a first image of the object during illumination of the object with the first light and a second image of the object during illumination of the object with the second light using a common sensor array, wherein the light recorded by the sensor array is attenuated in at least one of the spectral regions in which the first light has high intensities. This method differs significantly from the present invention.

Document JP2008073280 relates to image processing of eye-fundus to accurately determine the region of a bleeding/haemorrhage in diseases such as diabetic retinopathy. This solution is to remove blood haemorrhage region from the normal blood region by means of image processing using data of colour fundus oculi photography and implementing polar coordinate conversions and transformations to obtain polar coordinate conversion image data. Haemorrhage region is then extracted using pixel analysis of RGB colour components. Since the invention bases on backscattered light analysis no details of lipofuscin, melanin and especially haemoglobin composition alterations can be acquired and the method thus differs significantly from the present invention.

The paper by Kaluzny et al. (Current Eye Research 42, 629-635, 2017) revealed that the spectral properties of a backscattered light can be used to detect the oxygenation ratio of the blood vessels in retina by taking into account absorption spectra of haemoglobins as well. Assuming that the appropriate light spectrum is used (covering the absorption spectra of haemoglobins) this method would be applicable to locate blood-leaking areas (only) if one would be able to localize the scatterers to a single plane in the retina. Since these is impossible and the light is scattered from various optical depths (planes) of the retina, the superposition of the images scattered at each depth blurs the final image, decreasing the resolution of the final blood localization. This precludes the identification of weakly leaking vessels, which indicate possible pathological conditions and remind the expert to run further in-depth diagnostics. This problem is solved by the present invention.

WO 2013/109966 A1 discloses hyperspectral quantitative fluorescence imaging using fluorescence excitation light wherein spectra are fitted to create a correction image, which is then used to correct the measured raw fluorescence to produce corrected quantitative fluorescence images. Spectral unmixing is then used to separate the contributions from fluorophores, which may include tissue autofluorescence, to construct a concentration map. In the method disclosed in that document, the acquired images are processed to determine absorption and scattering spectral parameters. In an example, determining the absorption and scattering parameters is performed by interpolating. The fluorescence emission image(s) are then corrected by using the absorption and scattering parameters to produce corrected fluorescence emission images giving a quantitative distribution of each fluorophore, that may be native to the tissue. The absorption and scattering parameter spectra at each pixel are then decomposed to provide tissue component images mapping concentrations of typical tissue constituents such as oxygenated and deoxygenated hemoglobin; these are then added and ratioed to provide a total hemoglobin image and a percent-oxygenation map or image of hemoglobin oxygenation in the tissue. The images, including corrected, quantitative, fluorescence, hemoglobin, and percent oxygenation, are then displayed for use in diagnosis.

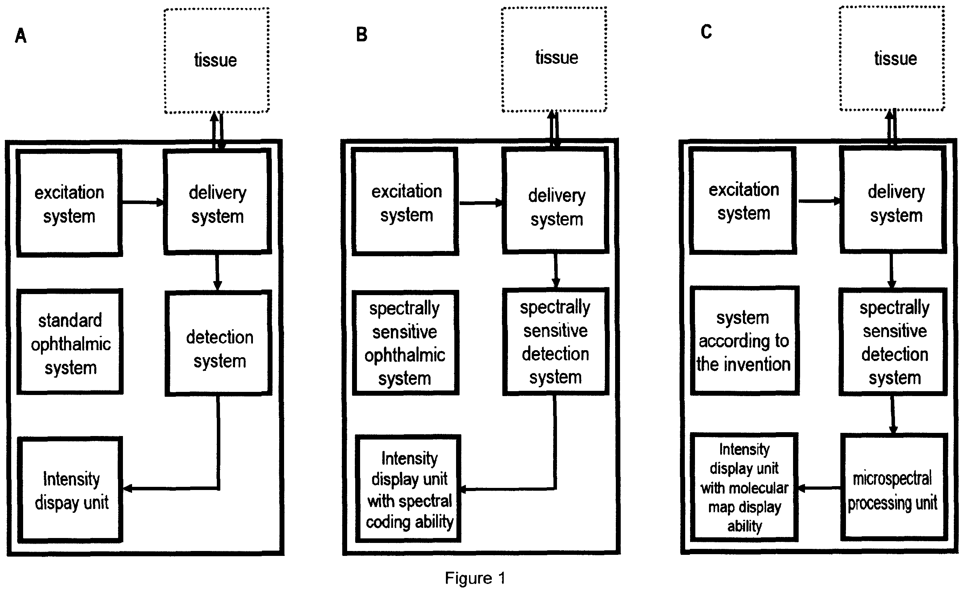

Although many ophthalmic devices are known, their typical construction is shown in Figure 1, panels A and B, but none of them is capable of processing autofluorescence images in the same way as the present invention.

## Description of the invention

The present invention aims to provide a method for detection of irregularities based on measured alterations in the autofluorescence spectra of endogenous fluorophores, which are mainly represented by lipofuscin that will map areas with blood leakage, thereby providing simple interpretation of results and enabling improved diagnostics. Alterations in the autofluorescence spectra are considered to be driven by changes in the local concentration of absorbent molecules, such as haemoglobin and melanin indicating on specific pathology/disorder. Other endogenous fluorophores in the eye retina are tryptophan, phenyalanine, tyrosine, NADPH, flavin, retinal, collagen, elastin, lutein and zeaxanthin, but these in comparison to lipofuscin represent a minor portion of the said fluorophores. Their importance depends on their spectral intensity as well as on the emitting spectral range. Other fluorophores are considered important and is taken into account in our analysis, if its relative spectral intensity exceed 3% of total intensity and if at least part of its emitting wavelength range falls into the range between 510 nm and 590 nm. These fluorophores are excited by visual light in the range from 350nm to 550nm in a single photon way and in the near infrared range between 700nm and 1100nm in the two-photon excitation way. In continuation only lipofuscin will be mentioned, but the method is also suitable for application when any of other above-mentioned fluorophores is present under conditions defined above.

The crucial idea underlying the present invention is that the spectra of the absorbers haemoglobins and melanin, located in the emitted light pathway, are subtracted from the spectrum of the emitter mainly lipofuscin, located mostly in a single optical plane, with the aim of identifying and localizing the absorbers. This in turn enables accurate mapping of haemoglobin and oxyhaemoglobin locations in addition to physiologically relevant lipofuscin changes. Taking into account the geometrical consideration of the haemoglobin locations one can identify non-vessel locations of haemoglobin providing useful clinical information regarding the state of retinal tissue including RPE and choroid.

The method for detection of irregularities in an eye is based on identifying the haemoglobin component and melanin-modified lipofuscin component from measured autofluorescence signal. The method according to the invention is defined in claim 1.

A further aspect of the present invention is to provide an ophthalmic device performing the above-mentioned method, so that the device is able to process autofluorescence images so that presence of blood not located in blood vessels can be detected.

The invention will be described with support of figures, which show:

Figure 1: schematic view of a standard ophthalmic system (A), spectrally sensitive system (B) and the system according to the present invention (C)

Figure 2: Schematic view of possible combinations of detection system with regards to the delivery system

Figure 3: Spectral density example as published in Urbancic et al.

Figure 4a: Melanin absorbance spectra

Figure 4b: lipofuscin fluorescence in retinal spots with notably different concentration of melanin

Figure 5: Absorption spectra of haemoglobin and oxyhaemoglobin

Figure 6: Inconclusive auto fluorescence image (left) and too complex single-component wavelength-shifted colour map of the existing FMS image analysis (right). Fitting is done by one spectral component. No exact mapping of haemoglobin can be performed.

Figure 7a: Original autofluorescence image (left) and maps of lipofuscin shift or lipofuscin-to-melanin ratio (right) according to the present invention showing RPE regions, which might need therapy or further diagnostics.

Figure 7b: Regions with oxygen-rich blood or oxygen-poor blood (up) and haemoglobin map (down) obtained with the present invention

Figure 7c: An example of the experimentally detected spectral profile within a pixel with high haemoglobin absorption.

Figure 8: Schematic view of the processing unit

Figure 1 shows a schematic view of how a standard ophthalmic system is modified in order to allow performance of the method according to the present invention. Panel A shows the standard ophthalmic system, while panel B shows rare spectrally sensitive systems. The system according to the invention is shown in panel C, which has to be spectrally sensitive and capable of assigning spectral information with regard to concentration of molecules (mapping).

With the proper excitation source, autofluorescence of the retinal tissue is measured with an appropriate spectrally sensitive imaging or scanning device according to well established practice. The final dataset comprises of 2D array of spectra, i.e. $(x,y,\lambda)$ datacube. Such dataset can be acquired in a hyperspectral (HSC) imaging way by hyperspectral cameras such as the one described at address: https://www.imec-int.com/en/articles/imec-s-high-speed-ultrasonic-snapscan-camera-enables-hyperspectral-imaging-acquisition-in-less-than-one-second). It can also be acquired by ordinary CCD or CMOS cameras with (liquid crystal or acousto-optic) tunable filters in front of them as in fluorescence microspectroscopy (FMS, further denoted as SF&2D) (Biomed. Opt. Express 2, 2083-2095 (2011)). Both techniques enable spectral imaging with few-nanometres peak position resolution.

Alternatively $(x,y,\lambda)$ datacube can be acquired in a scanning way. Most frequently, two spatial coordinates are scanned by acousto-optic modulators or galvo mirrors (as in the case of scanning ophtalmoscopes) while the spectral information is acquired with diffraction element in front of the 1D detector array such as 1D CMOS, 1D CCD or PMT array (further denoted as DG&1D). Alternatively, only one spatial coordinate is scanned and the other is imaged in one dimension of the 2D detector array (2D CMOS, 2D CCD) while spectral information is detected in the second dimension of the same 2D detector array (further denoted as DG&2D).

While acquiring the whole $(x,y,\lambda)$ dataset, one inevitably confronts with the long duration of acquisition. In case of hyperspectral imaging, the total duration is limited by readout bandwidth, which currently allow the acquisition of the whole $(x,y,\lambda)$ dataset in between 10ms and 100 ms, depending on the number of pixels that need to be readout. Since different pixels have different filters deposited in front of them, extrapolation must be used in post-processing to get similar spatial resolution as in the microspectroscopic imaging. In the later, the acquisition time of the whole $(x,y,\lambda)$ dataset acquired by liquid crystal tunable filter cannot be faster than few s being limited by the switching time of the liquid crystal tunable filter. If the acousto-optic filter would be used, the acquisition time of the whole $(x,y,\lambda)$ dataset could be as fast as few tenths of ms, limited primarily by an exposure time needed to acquire enough light for the significant signal-to-noise and the readout time of the 2D detector. It should be however noted, that acousto-optic filter would blur an image due to the fact that light of different wavelengths passes this filter in different angles, which makes it the least appropriate device.

In case of a 2D scanning with 1D (spectral) detector, the total duration is again in the order of seconds, not limited by the scanning speed but by exposure time needed to achieve the proper signal-to-noise. In case of 1D scanning with 2D detector (spatial-spectral), the duration is limited by the readout time of the 2D detector, which for the desired number of lines still converges to duration of several hundreds of ms or up to 1s. According to the current dataset acquisition speed, the hyperspectral dataset can still be blurred due to eye motion. To eliminate this, eye-tracking algorithm can be used, although many artefacts can be eliminated already by utilizing imaging methods, which seem to be more appropriate and easier to be implemented.

Table 1 shows the most frequent implementations of the acquisition of hyperspectral $(x,y,\lambda)$ data cube with 1st and 2nd scanning/imaging step:

| Modality | spectral selection | detector type | 1st step | 2nd step |
| --- | --- | --- | --- | --- |
| SF&2D imaging | Filter wheels or LCTF | CCD or CMOS | x,y (imaged) | λ (scanned) |
| HSC imaging | Filters in front of pixels | CMOS | x,y,λ (imaged) | |
| DG&2D scanning | Diffraction grating | CCD or CMOS | λ,x (imaged) | y (scanned) |
| DG&1D scanning | Diffraction grating | 1D PMT array or 1D CMOS | λ (imaged), x (scanned) | y |

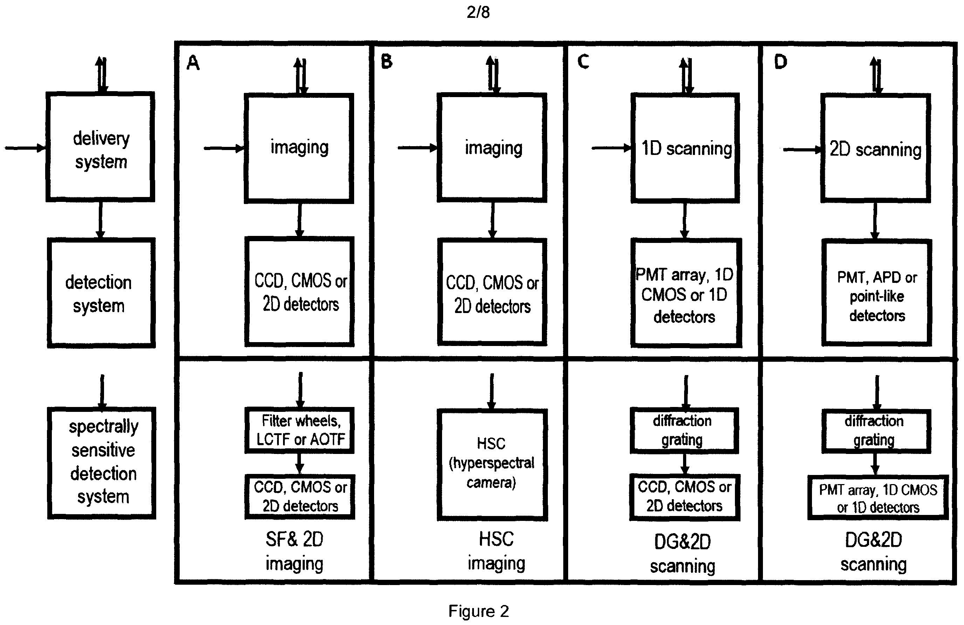

Figure 2 schematically shows information from Table 1 and illustrates some of the possible combinations of detection system with regards to the delivery system.

As stated above the main source of endogenous fluorescence is lipofuscin, although there can be other sources of fluorescence as well (Schweitzer et. al., Microsc. Res. Tech. 70, 410-419, 2007). Taking into account the fact that majority of the fluorescence signal come from lipofuscin granules located in RPE, the RPE layer serves as the well-defined light (planar) source illuminating the retina from below. The spectral density function of this endogenous fluorescence $S_1(\lambda)=dl/d\lambda(\lambda)$ can be approximated by an unimodal function, preferably asymmetric unimodal function such as a log-normal (LN) type of spectral component $S_1(\lambda)$ as described by Equation 3 of paper *Urbancic et.al.* (Opt. Express 21, 25291-25306 (2013)).

$$S_{LN}(\lambda) = \begin{cases} \exp\left(-\dfrac{\log 2}{4a^2}\left[\log\left(\dfrac{4a}{w}(\lambda - \lambda_{MAX}) + 1\right)\right]^2\right), & \lambda > \lambda_{MAX} - \dfrac{w}{4a}, \\[20pt] 0. & \lambda \leq \lambda_{MAX} - \dfrac{w}{4a}. \end{cases}$$

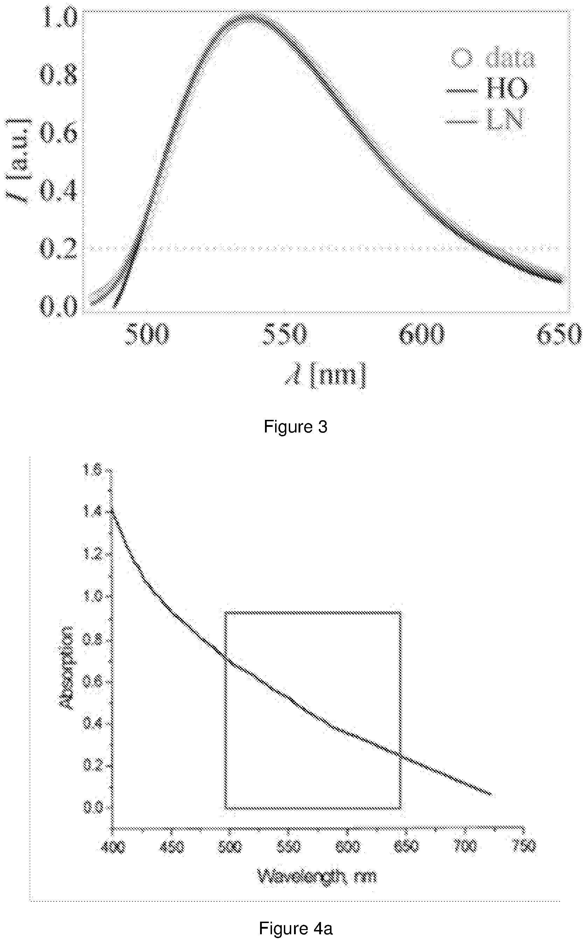

Fig. 3 shows approximation of the fluorescence spectra lineshape empirical asymmetrical function (LN). Although other depicted types such as HO, derived from quantum mechanics theory, can be physically sounder, the LN empirical model is used since it allows fastest computation. The LN approximation or other asymmetric unimodal lineshape is also useful for cases in which other endogenous fluorophores are present, which are mentioned above. The equation namely enables variation of parameters $\lambda_{max}$, w and a in any way, so that the spectre can be shifted, broadened or changed on other well defined (physically meaningful) ways. This allows functioning of this method in events that any of the other endogenous fluorophores would emit light as strongly as lipofuscin.

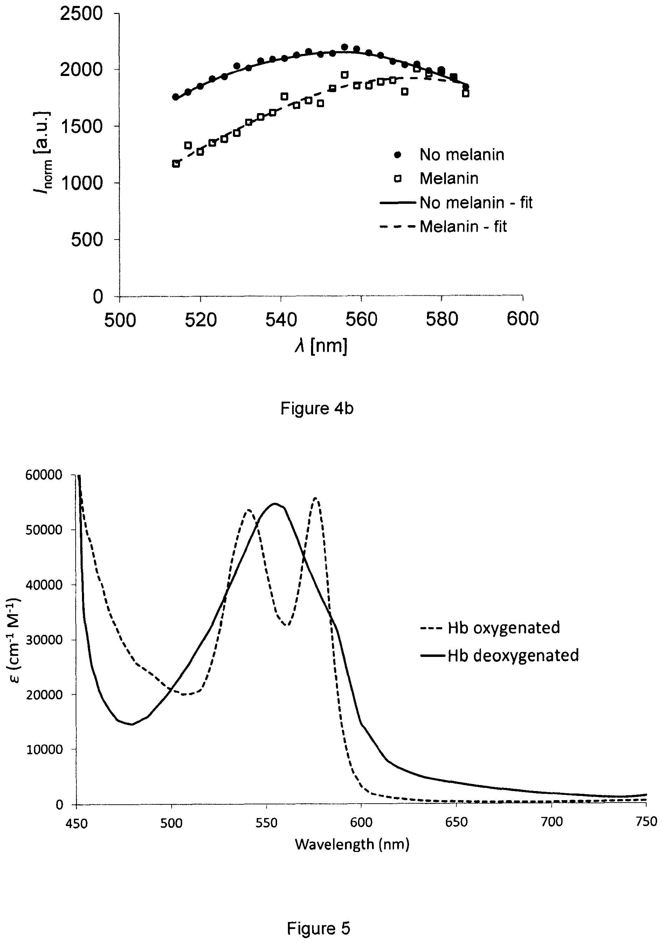

Figure 4 shows that highly absorbent melanin influences lipofuscin spectral shape. Due to presence of melanin in RPE, acting as a broad-band spectral absorber with an absorption almost monotonously decreasing towards higher wavelengths (Fig 4a), "lipofuscin" spectral component $S_1(\lambda)$ appears shifted towards higher wavelength (Fig 4b). To account for that, additional "melanin" spectral component $S_3(\lambda)$ (Fig. 4a) can be subtracted from the $S_1(\lambda)$ (characterized by relative portion $p_3$) or the "lipofuscin" spectral component $S_1(\lambda,\lambda_{max})$ can be spectrally shifted (Fig. 4b, characterized by the $\lambda_{max}$, which indicates position of a maximum in a spectral density of $S_1(\lambda,\lambda_{max})$ spectral component). Locally this can be used to discriminate modified molecular or cellular environment.

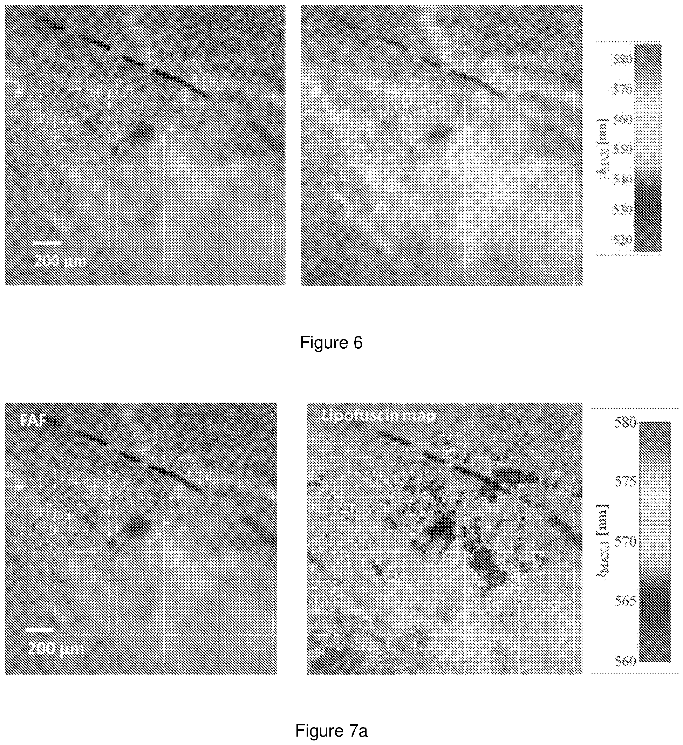

The emitted light from (RPE) plane of fluorophores such as lipofuscin pass the retina and is partially absorbed by the retina pigment. One of them is haemoglobin, an iron-containing oxygen-transport metalloprotein in the red blood cells, located in blood vessels of all vertebrates. It is a well-characterized narrow-band spectral absorber (respective absorption spectra are shown in Fig. 5) with its absorption profile being approximated by $S_2(\lambda)$ spectral component. Since the fluorescence light, emitted mostly by lipofuscin in RPE and defined with its spectral profile $S_1(\lambda)$, is partially absorbed by the haemoglobin located in retina and defined with its absorption spectral profile $S_2(\lambda)$, the light that comes out from the retina is defined with a formula $(1-p_1)S_1(\lambda;\lambda_{max}) - p_1S_2(\lambda)$, where $p_1$ is the weight of the $S_2(\lambda)$ spectral component and represents the relative amount of the light absorbed by the (total) haemoglobins (Fig. 6) in each pixel of an image.

Because haemoglobin can be either oxygenated or deoxygenated, spectral density $S_2(\lambda)$ is a sum of the two absorption spectra $p_2S_{2-oxyHb}(\lambda) - (1 - p_2)S_{2-Hb}(\lambda)$, where $p_2$ is weight of the oxygenated species (oxyHb) and $(1-p_2)$ is the weight of deoxygeneted species (Hb). Taking into account different states of haemoglobin and their different absorption spectra, this approach allows identification of haemoglobin while discriminating them according to their location in veins or arteries, which may be preferred by medical personnel performing diagnostics.

Thus, the following steps are carried out:

- approximating spectral density function $S(\lambda)(x,y)$ in each pixel of the image by a sum of spectral components;
- representing each spectral component by a unimodal function;
- assigning each spectral component to either emitter or absorber;
- defining sign of each spectral component as positive for emitter and as negative for absorber;
- associating at least one of the positively signed spectral components to emitter such as lipofuscin;
- associating at least one of the negatively signed spectral components to haemoglobin and defining its relative portion with at least one parameter;
- in case two spectral components are associated with haemoglobins, for example one with oxygenated form and another one with deoxygenated form, their relative portion is defined with additional parameter.

Joining all of the above discussed steps together, spectral density of the light that passes the retina might be approximated by equation:

$$S(\lambda; \lambda_{\max}, p_1, p_2) = (1 - p_1)S_1(\lambda; \lambda_{\max}) - p_1(p_2 S_{2-OxyHem}(\lambda) + (1 - p_2)S_{2-Hb}(\lambda)),$$

which is then fitted to an experimentally derived spectral density. For successful characterization of all the components, spectral density must be acquired with a resolution of at least 30 nm, which means that the image is taken at a wavelength step of 30 nm or less, typically 10 nm or less, preferably 5 nm.

Fitting procedure provides spatially dependence of the following parameters shown in Table 2:

| parameter | description | range |
|---|---|---|
| $\lambda_{\max}$ | Shift of fluorescence emission spectrum due to absorption in melanin or interaction with other molecules; denoted as **lipofuscin** | 400nm - 700 nm |
| $p_1$ | Spectral weight of all haemoglobins relative to spectral weight of all endogenous emitters; denoted as **haemoglobin** | 0 - 1 |
| $P_2$ | Spectral weight of the oxygenated haemoglobin (oxyHb); denoted as **oxyhaemoglobin** | 0 - 1 |

The parameter $p_1$ in Table 1 ranges from 0 to 1 representing a relative intensity of the absorption spectral component associate with all haemoglobins with respect to the intensity of lipofuscin emission spectral component. If no oxyhaemoglobin or deoxyhaemoglobin is present, the value is 0. In case when pixel is saturated with oxyhaemoglobin or deoxyhaemoglobin, the value is 1. The parameter $p_2$ in Table 1 ranges from 0 to 1 representing a relative portion of the spectral component of the oxyhaemoglobin with respect to the total haemoglobin. If only oxyhaemoglobin is present, the value is 1, while in case of only (deoxy)haemoglobin, the value is 0.

Most importantly, this procedure provides an accurate map of haemoglobins in the retina or close to RPE, which is then analysed within the geometrical perspective to search for the blood being leaked out from the vessels. By clearly separating the haemoglobin light-absorbing component from the lipofuscin component, this feature makes the present invention very different from the original FMS+ idea (Urbancic et al.), which was developed to fit one or more emitting fluorophores in the sample. On the contrary, this invention implements the solution for absorption components, which are subtracted from the emission spectrum (such as of lipofuscin). Secondly, the effect of absorbers is now represented by the portion of the absorbers and not by the shift of emission spectrum.

In order to increase the contrast while presenting the values of these parameters, $p_1$ and $p_2$ can be multiplied by the high-pass filter in the form of $\exp(-(p_2 t/p_2)^2)$, where $p_2 t$ is the threshold value, below which the component is presented in black to indicate its significance is low. This gives better images, more easily readable, thus of an added value for the possible clinical use.

In the approach above, the presence of melanin was taken into account via spectral shifting the lipofuscin spectral component S1. Alternatively, it can be taken into account also by directly subtracting melanin absorbing spectral profile (Fig.4a). This can directly characterize melanin-to-lipofuscin concentration ratio in addition to haemoglobins concentrations. Assuming the generally known shapes of lipofuscin emission ($S_1(\lambda)$), which can also be replaced or corrected for the presence of other endogenous fluorophores, and melanin absorption spectra ($S_3(\lambda)$; Fig. 4a), previously fitted parameter $\lambda_{\max}$ can now be substituted with $p_3$, the weight of the melanin absorption spectra $S_3(\lambda)$ subtracted from the endogenous fluorophores' emission spectra $S_1(\lambda)$. In the previous formula, the first component $S_1(\lambda; \lambda_{\max})$ need to be replaced by $(1-p_3)S_1(\lambda) - p_3 S_{3-Mel}(\lambda)$. Joining all of the above discussed pieces together, the spectral density, which fall onto the detector, is now approximated by

$$S(\lambda; p_1, p_2, p_3) = (1 - p_1)((1 - p_3)S_1(\lambda) - p_3 S_{3-Mel}(\lambda)) - p_1(p_2 S_{2-OxyHem}(\lambda) + (1 - p_2)S_{2-Hb}(\lambda))$$

and should be fitted to an experimentally acquired spectral density. As said before, the experimental resolution of at least 30 nm, typically 10 nm, preferably 5 nm, is needed to enable accurate detection of spatially dependence of the following parameters shown in Table 3:

| parameter | description | range |
|---|---|---|
| $p_1$ | Spectral weight of all hemoglobins relative to spectral weight of all endogeneous emitters; denoted as **hemoglobin** | 0 - 1 |

(continued)

| parameter | description | range |
|---|---|---|
| $p2$ | Spectral weight of the oxygenated hemoglobin (oxyHb); denoted as **oxyhemoglobin** | 0 - 1 |
| $p3$ | Spectral weight of all melanin relative to spectral weight of all endogeneous emitters (mainly lipofuscin); denoted as **melanin** | 0 - 1 |

The parameter $p_1$ in Table 3 ranges from 0 to 1 representing a relative intensity of the absorption spectral component associate with all haemoglobins with respect to the intensity of lipofuscin emission spectral component with already subtracted component of melanin. If no oxyhaemoglobin or deoxyhaemoglobin is present, the value is 0. In case when pixel is saturated with oxyhaemoglobin or deoxyhaemoglobin, the value is 1.

The parameter $p_2$ in Table 2 ranges from 0 to 1 representing a relative portion of the spectral component of the oxyhaemoglobin with respect to the total haemoglobin. If only oxyhaemoglobin is present, the value is 1, while in case of only (deoxy)haemoglobin, the value is 0.

The parameter $p_3$ in Table 2 ranges from 0 to 1 representing a relative intensity of the melanin-associated absorption spectral component with respect to the intensity of lipofuscin emission spectral component. If no melanin is present, the value is 0. In case when pixel is saturated with melanin, the value is 1.

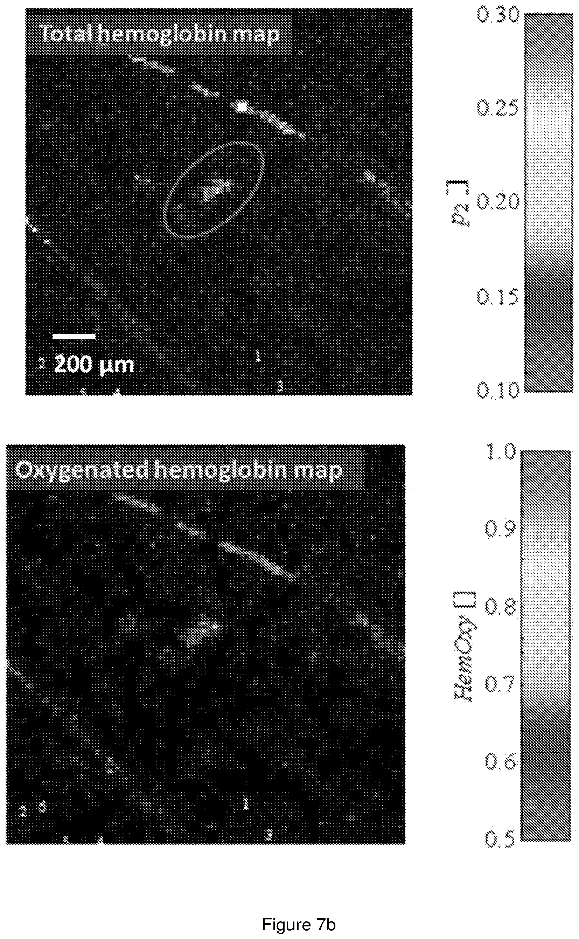

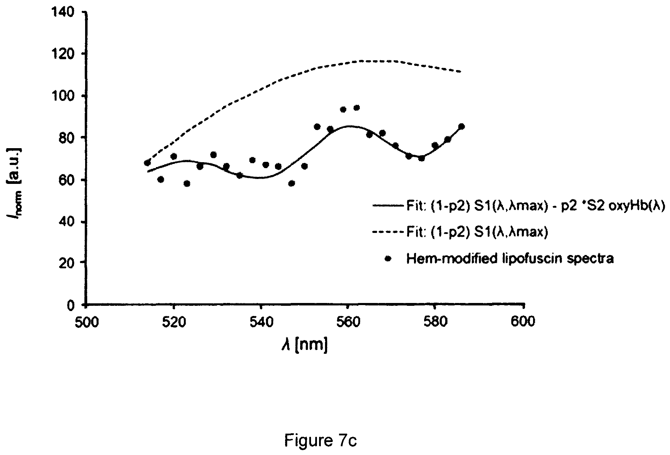

Spatial dependences of these parameters can be presented in terms of maps using normal grayscale or using colour coding of the FMS approach (Arsov et al. (Biomed. Opt. Express 2, 2083-2095 (2011)). Colour coding can give better impression of the values of parameters, but is not required for identification of pathological locations such as blood leakage. Note, that the current invention is however not to map the spectral parameters but to map the physiologically relevant **lipofuscin,** melanin, **haemoglobin** and **oxyhaemoglobin** concentrations to allow conclusive identification of the pathologies in the eye. Fig 6 shows inconclusive auto fluorescence image (left) and too complex single-component wavelength-shifted colour map of the existing FMS image analysis (right). Fitting is done by one spectral component. No exact mapping of haemoglobin can be performed. While the autofluorescence image or FMS approach yield the maps, which are difficult to be conclusive (Fig. 6), the modified model and different usage of colour coding within the current invention map the haemoglobin and lipofuscin/melanin (Fig. 7), which can be directly used to identify blood leakage and cellular damage in retina or RPE. Figure 7 shows the analysis of the current invention using one emitter and up to 3 absorbers' components for directly mapping haemoglobin and lipofuscin/melanin "defected" regions. Compared to the original autofluorescence image (Fig 7a, left), the newly produced maps of lipofuscin shift or lipofuscin-to-melanin ratio (Fig 7a, right) much more clearly identifies the RPE regions, which might need therapy or further diagnostics. While blood leakage is impossible to detect within original autofluorescence image (Fig 7a, left), it is immediately recognizable within haemoglobin map of the new approach (Fig 7b, up). In addition, the new approach can associate such regions to oxygen-rich blood or oxygen-poor blood (Fig. 7b, down). An example of the experimentally detected spectral profile within a pixel with high haemoglobin absorption is shown in Fig. 7c.

It should be pointed out that the obtained results do not contain artefacts, as the presence of blood is inevitably linked to the spectral component of haemoglobin, which is visible in the lipofuscin emission spectre. However, the sensitivity of the method is approximately 2 to 10% of the lipofuscin signal.

This method allows reliable calculation and interpretation of physiologically relevant concentrations of haemoglobin and oxyhaemoglobin after obtaining autofluorescence measurements, which provides clinically important information about blood leakage, even in cases of minimal blood leakage.

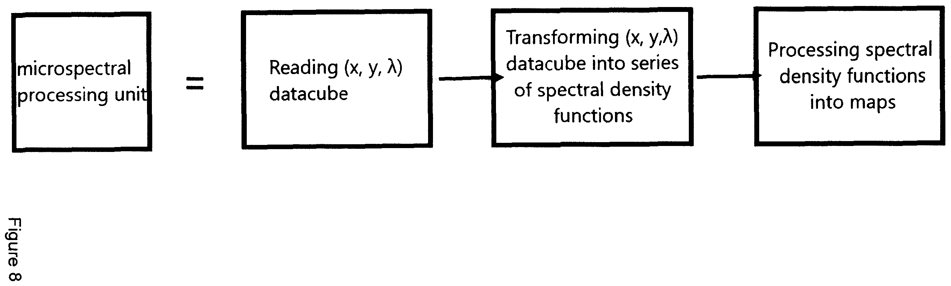

The method according to the invention can be integrated in a processing unit arranged to read the (x, y, λ) datacube, transforms this (x, y, λ) datacube into series of spectral densities and processes the later into maps as described above. A schematic view of the processing unit is shown in Figure 8.

The above-described method according to the present invention is incorporated into the processing unit or an ophthalmic apparatus by means of an algorithm.

The said processing unit can be incorporated into new ophthalmic apparatus or into an existing ophthalmic apparatus, which should be modified to enable acquisition of a (x, y, λ) datacube and to run the algorithm performing the above described method of image processing. The light source of an ordinary ophthalmic apparatus can be used to excite endogenous fluorophores through pupil, such as xenon arc lamp, LED sources, lasers. Delivery system can be again the one of an ordinary ophthalmic apparatus, delivering excitation light through reflection on dichroic or high-pass filter (R-way) or transmission through inverse dichroic or low-pass filter (T-way). Excitation can be done on the whole eye-tissue at once (imaging modality Bi; example: fundus autofluorescence = FAF), in a single point (scanning modality Bs; example: laser scanning ophtalmoscope) or with a combination of both (combi modality Bc; examples rare but possible) (all combinations of (R-way,T way) and (Bi,Bs,Bc) are possible).

Emitted fluorescent light is characteristically Stoke's shifted against excitation light; it has higher wavelength with respect to the excitation light and can thus be separated from the excitation light:

- in case of R-way it is reflected into new optical pathway towards a detector;
- in case of T-way it is transmitted into new optical pathway towards the detector.

Before emitted light is detected on the detector, it usually passes a broad-band filter, which reduces the scattered excitation light for several orders of magnitude, usually at least 4. The detector has to generate the said datacube (x,y, $\lambda$) and is implemented in one of the above-mentioned scheme and Figure 2 (SF&2D, HSC, DG&1D and DG&2D). Possible variants of the ophthalmic systems are shown in Figures 1 and 2.

The method of processing of the said datacube (x,y,$\lambda$) according to the present invention could also be used in fields other than ophthalmology, in which diagnostic methods base on measurement of autofluorescence. One such field is detection of blood leakage in the intestine (gut), which is known to comprise several endogenous fluorophores. Since many diseases begin with small leakage of blood from the vessels, it would be beneficial for early diagnosis and timely treatment if these events were detected quickly and reliably.

## Claims

1. An image-processing method for detection of irregularities in tissue based on the measured auto-fluorescence signal of endogenous fluorophores, preferably lipofuscin, comprising the following steps:

   - supplying the method with measured auto-fluorescence of an eye retinal tissue in a form of (x,y,$\lambda$) datacube, where the spectral information is acquired with a wavelength step of maximally 30 nm and where the sum of the signal of all the acquired wavelengths at each image point represents the standard autofluorescence image intensity;
   - transforming the (x,y,$\lambda$) datacube into a 2D array of spectral density functions $S(\lambda)(x,y)$, a spectral density function being a function of wavelength A at each location (x,y) across the image of the retinal tissue;
   - approximating the spectral density function $S(\lambda)(x,y)$ at each pixel of the image by a sum of spectral components;
   - representing each spectral component by a unimodal function;
   - assigning each spectral component to either an emitter or an absorber;
   - defining the sign of each spectral component as positive for each emitter and as negative for each absorber;
   - associating at least one of the positively signed spectral components to an emitter such as lipofuscin;
   - associating at least one of the negatively signed spectral components to haemoglobin and defining its relative proportion with at least one parameter;
   - fitting the spectral density function $S(\lambda)(x,y)$ at each pixel of the image using the sum of all of the spectral components to derive the relative proportions of the spectral components and other used parameters at each pixel of the image;
   - obtaining spatial information of parameters of the spectral components, mainly peak positions and relative proportions, so that an accurate map of emitters and absorbers, for example haemoglobins, in the retina or close to the retinal pigment epithelium is generated.

2. The method according to claim 1, wherein the relative proportions of haemoglobin are divided into haemoglobin and oxyhaemoglobin independently in order to discriminate veins and arteries, so that the method comprises an additional step, in which two spectral components are associated with haemoglobins, for example one with oxygenated form and another one with deoxygenated form, and their relative proportion is defined with an additional parameter.

3. The method according to claim 1 or 2, wherein the sum of the components is defined as

$$S(\lambda; \lambda_{\max}, p_1, p_2) = (1 - p_1)S_1(\lambda; \lambda_{\max}) - p_1(p_2 S_{2-OxyHem}(\lambda) + (1 - p_2)S_{2-Hb}(\lambda))$$

or any linear combinations of the same terms, in which $p_1$ and $p_2$ represent total and relative proportions of haemoglobin forms, respectively.

4. The method according to any preceding claim, wherein one of the negatively signed spectral components is associated with melanin.

5. The method according to claim 4, wherein the sum of the components is defined as

$$S(\lambda; p_1, p_2, p_3) = (1-p_1)((1-p_3)S_1(\lambda) - p_3 S_{3-Mel}(\lambda)) - p_1(p_2 S_{2-OxyHem}(\lambda) + (1-p_2)S_{2-Hb}(\lambda))$$

or any linear combinations of the same terms, in which $p_1$ and $p_2$ represent total and relative proportions of haemoglobin forms, respectively, and parameter $p_3$ depicts melanin proportion.

6. The method according to any of the preceding claims, wherein the analysed datacube (x,y,$\lambda$) is obtained by spectral imaging.

7. The method according to claim 6, wherein the spectral imaging is performed by a hyperspectral camera, a CCD camera or a CMOS camera.

8. The method according to any claim from 1 to 3, wherein the analysed databcube (x,y,$\lambda$) is obtained by a scanning device.

9. The method according to any of the preceding claims, wherein at least one of the positively signed spectral components is associated with an emitter other than lipofuscin, such as tryptophan, phenyalanine, tyrosine, NADPH, flavin, retinal, collagen, elastin, lutein and zeaxanthin or any other emitter which emits in the range of wavelengths from 510nm to 590nm.

10. The method according to any of the preceding claims, wherein values of parameters $p_2$ and $p_3$ are multiplied by a high-pass filter, such as in the form of exp(-(p2t/p2)$^2$), where p2t is a threshold value.

11. The method according to any of the preceding claims, wherein after the step of obtaining spatial information about parameters $\lambda_{max}$ or $p_3$, $p_1$ and $p_2$ the obtained data are colour coded.

12. The method according to any of the preceding claims, wherein the spectral step is 10 nm or less, preferably 5 nm or less.

13. A processing unit for an ophthalmic apparatus, the processing unit arranged to read the (x, y, $\lambda$) datacube, to transform this (x, y, $\lambda$) datacube into series of spectral densities and to process the latter into maps according to the claims from 1 to 12.

14. An ophthalmic apparatus comprising:

- an excitation system of light source with the wavelengths in the visual range between 350 nm and 550 nm and in the near infrared range between 700 nm and 1100 nm,
- a delivery system performing either imaging or scanning;
- a detection system acquiring a (x,y,$\lambda$) datacube,
- the processing unit according to claim 13,
- a display unit, which displays the maps such as haemoglobins' maps.

15. Use of the processing unit according to claim 13 or the ophthalmic apparatus according to claim 14, in ophthalmology.


**Patentansprüche**

1. Bildverarbeitungsverfahren zur Erkennung von Unregelmäßigkeiten in Gewebe basierend auf dem gemessenen Autofluoreszenzsignal von endogenen Fluorophoren, vorzugsweise Lipofuszin, umfassend die folgenden Schritte:

- Bereitstellen des Verfahrens mit gemessener Autofluoreszenz eines Augenretina-Gewebes in Form von (x, y, $\lambda$)-Datenwürfeln, wobei die Spektralinformation mit einem Wellenlängenschritt von maximal 30 nm erfasst wird und wobei die Summe des Signals aller erfassten Wellenlängen an jedem Bildpunkt die Standard-Autofluoreszenz-Bildintensität darstellt;
- Transformieren der (x, y, $\lambda$)-Datenwürfel in eine 2D-Anordnung von Spektraldichtefunktionen S($\lambda$)(x, y), wobei eine Spektraldichtefunktion eine Funktion der Wellenlänge $\lambda$ an jeder Stelle (x, y) über das Bild des retinalen Gewebes ist;

- Approximieren der Spektraldichtefunktion S($\lambda$)(x, y) an jedem Pixel des Bildes durch eine Summe von Spektralkomponenten;
- Darstellen jeder Spektralkomponente durch eine unimodale Funktion;
- Zuordnen jeder Spektralkomponente zu jeweils einem Emitter oder einem
- Absorber;
- Definieren des Vorzeichens jeder Spektralkomponente als positiv für jeden Emitter und als negativ für jeden Absorber;
- Zuordnen mindestens einer der Spektralkomponenten mit positivem Vorzeichen zu einem Emitter wie Lipofuszin;
- Zuordnen mindestens einer der Spektralkomponenten mit negativem Vorzeichen zu Hämoglobin und Definieren ihres relativen Anteils mit mindestens einem Parameter;
- Anpassen der Spektraldichtefunktion S($\lambda$)(x, y) an jeden Pixel des Bildes unter Verwendung der Summe aller Spektralkomponenten, um die relativen Anteile der Spektralkomponenten und anderer verwendeter Parameter an jedem Pixel des Bildes abzuleiten;
- Erhalten von räumlichen Informationen von Parametern der Spektralkomponente, hauptsächlich Spitzenpositionen und relativen Anteilen, so dass eine genaue Karte von Emittern und Absorbern, beispielsweise von Hämoglobin, in der Retina oder nahe dem retinalen Pigmentepithel, erzeugt wird.

2. Verfahren nach Anspruch 1, wobei die relativen Anteile von Hämoglobin unabhängig voneinander in Hämoglobin und Oxyhämoglobin unterteilt werden, um Venen und Arterien zu unterscheiden, so dass das Verfahren einen zusätzlichen Schritt umfasst, bei dem zwei Spektralkomponenten mit je einem Hämoglobin, beispielsweise mit oxygenierter Form und einer anderen mit deoxygenierter Form, assoziiert werden und deren relativer Anteil mit einem weiteren Parameter definiert wird.

3. Verfahren nach Anspruch 1 oder 2, wobei die Summe der Komponenten als

$$S(\lambda; \lambda_{max}, p_1, p_2) = (1 - p_1)S_1(\lambda; \lambda_{max}) - p_1(p_2 S_{2-OxyHem}(\lambda) + (1 - p_2)S_{2-Hb}(\lambda))$$

oder beliebige lineare Kombinationen derselben Ausdrücke definiert ist, wobei $p_1$ und $p_2$ gesamte bzw. relative Anteile von Hämoglobinformen darstellen.

4. Verfahren nach einem der vorhergehenden Ansprüche, wobei eine der Spektralkomponenten mit negativem Vorzeichen Melanin zugeordnet wird.

5. Verfahren nach Anspruch 4, wobei die Summe der Komponenten als

$$S(\lambda; p_1, p_2, p_3) = (1 - p_1)((1 - p_3)S_1(\lambda) - p_3 S_{3-Mel}(\lambda)) - p_1(p_2 S_{2-OxyHem}(\lambda) + (1 - p_2)S_{2-Hb}(\lambda))$$

oder beliebige lineare Kombinationen derselben Ausdrücke definiert ist, wobei $p_1$ und $p_2$ gesamte bzw. relative Anteile von Hämoglobinformen darstellen, und der Parameter $p_3$ den Melaninanteil darstellt.

6. Verfahren nach einem der vorhergehenden Ansprüche, wobei der analysierte (x, y, $\lambda$)-Datenwürfel durch spektrale Bildgebung erhalten wird.

7. Verfahren nach Anspruch 6, wobei die spektrale Bildgebung durch eine Hyperspektralkamera, eine CCD-Kamera oder eine CMOS-Kamera durchgeführt wird.

8. Verfahren nach einem der Ansprüche 1 bis 3, wobei der analysierte (x, y, $\lambda$)-Datenwürfel durch eine Abtasteinrichtung erhalten wird.

9. Verfahren nach einem der vorhergehenden Ansprüche, wobei mindestens eine der Spektralkomponenten mit dem positiven Vorzeichen einem anderen Emitter als Lipofuszin, wie Tryptophan, Phenyalanin, Tyrosin, NADPH, Flavin, Retinal, Kollagen, Elastin, Lutein und Zeaxanthin oder einem beliebigen anderen Emitter, der im Wellenlängenbereich von 510 nm bis 590 nm emittiert, zugeordnet ist.

**10.** Verfahren nach einem der vorhergehenden Ansprüche, wobei die Werte der Parameter $p_2$ und $p_3$ mit einem Hochpassfilter, wie z. B. in Form von $\exp(-(p_2t/p_2)^2)$, multipliziert werden, wobei $p_2t$ ein Schwellwert ist.

**11.** Verfahren nach einem der vorhergehenden Ansprüche, wobei nach dem Schritt des Erhaltens räumlicher Informationen über die Parameter $\lambda_{max}$ oder $p_3$, $p_1$ und $p_2$ die erhaltenen Daten farbcodiert werden.

**12.** Verfahren nach einem der vorhergehenden Ansprüche, wobei der Spektralschritt 10 nm oder weniger, vorzugsweise 5 nm oder weniger, beträgt.

**13.** Verarbeitungseinheit für eine ophthalmische Vorrichtung, wobei die Verarbeitungseinheit dazu eingerichtet ist, den $(x, y, \lambda)$-Datenwürfel zu lesen, um diesen $(x, y, \lambda)$-Datenwürfel in eine Reihe von Spektraldichten zu transformieren und Letztere in Karten, gemäß den Ansprüchen 1 bis 12, zu verarbeiten.

**14.** Ophthalmische Vorrichtung, umfassend:

- ein Anregungssystem der Lichtquelle mit den Wellenlängen im sichtbaren Bereich zwischen 350 nm und 550 nm und im nahen Infrarotbereich zwischen 700 nm und 1100 nm,
- ein Zuführsystem, das entweder eine Abbildung oder Abtastung durchführt;
- ein Ermittlungssystem zur Erfassung eines $(x, y, \lambda)$-Datenwürfels,
- die Verarbeitungseinheit nach Anspruch 13,
- eine Anzeigeeinheit, die Karten wie Hämoglobin-Karten anzeigt.

**15.** Verwendung der Verarbeitungseinheit nach Anspruch 13 oder der ophthalmischen Vorrichtung nach Anspruch 14 in der Ophthalmologie.

**Revendications**

**1.** Procédé de traitement d'image pour la détection d'irrégularités dans un tissu sur la base du signal d'autofluorescence mesuré de fluorophores endogènes, de préférence de la lipofuscine, comprenant les étapes suivantes :

- la fourniture du procédé avec une autofluorescence mesurée d'un tissu rétinien oculaire sous une forme de cube de données $(x, y, \lambda)$, les informations spectrales étant acquises avec une étape de longueur d'onde d'au maximum 30 nm et la somme du signal de toutes les longueurs d'onde acquises à chaque point d'image représentant l'intensité d'image d'autofluorescence standard ;
- la transformation du cube de données $(x, y, \lambda)$ en un réseau 2D de fonctions de densité spectrale S $(\lambda)(x, y)$, une fonction de densité spectrale étant une fonction de longueur d'onde $\lambda$ à chaque emplacement $(x, y)$ à travers l'image du tissu rétinien ;
- l'approximation de la fonction de densité spectrale S $(\lambda)(x, y)$ au niveau de chaque pixel de l'image par une somme de composantes spectrales ;
- la représentation de chaque composante spectrale par une fonction unimodale ;
- l'attribution de chaque composante spectrale à un émetteur ou à un absorbeur ;
- la définition du signe de chaque composante spectrale comme positif pour chaque émetteur et comme négatif pour chaque absorbeur ;
- l'association d'au moins l'une des composantes spectrales signées positivement à un émetteur tel que la lipofuscine ;
- l'association d'au moins l'une des composantes spectrales signées négativement à l'hémoglobine et la définition de sa proportion relative avec au moins un paramètre ;
- l'ajustement de la fonction de densité spectrale $S(\lambda)(x,y)$ à chaque pixel de l'image à l'aide de la somme de toutes les composantes spectrales pour dériver les proportions relatives des composantes spectrales et d'autres paramètres utilisés au niveau de chaque pixel de l'image ;
- l'obtention des informations spatiales de paramètres des composantes spectrales, principalement des positions de crête et des proportions relatives, de sorte qu'une carte précise d'émetteurs et d'absorbeurs, par exemple des hémoglobines, dans la rétine ou à proximité de l'épithélium pigmentaire rétinien, est générée.

**2.** Procédé selon la revendication 1, dans lequel les proportions relatives de l'hémoglobine sont divisées en hémoglobine et oxyhémoglobine indépendamment afin de discriminer les veines et les artères, de sorte que le procédé comprend une étape supplémentaire, dans laquelle deux composantes spectrales sont associées à des hémoglobines, par exemple une forme oxygénée et une autre avec une forme désoxygénée, et leur proportion relative est définie avec un paramètre supplémentaire.

3. Procédé selon la revendication 1 ou 2, dans lequel la somme de composantes est définie comme

$$S(\lambda; \lambda_{max}, p_1, p_2) = (1 - p_1)S_1(\lambda; \lambda_{max}) - p_1(p_2 S_{2-OxyHem}(\lambda) + (1 - p_2)S_{2-Hb}(\lambda))$$

ou toute combinaison linéaire des mêmes termes, dans laquelle $p_1$ et $p_2$ représentent des proportions totales et relatives de formes de l'hémoglobine, respectivement.

4. Procédé selon l'une quelconque des revendications précédentes, dans lequel l'une des composantes spectrales signées négativement est associée à de la mélanine.

5. Procédé selon la revendication 4, dans lequel la somme des composantes est définie comme

$$S(\lambda; p_1, p_2, p_3) = (1 - p_1)((1 - p_3)S_1(\lambda) - p_3 S_{3-Mel}(\lambda)) - p_1(p_2 S_{2-OxyHem}(\lambda) + (1 - p_2)S_{2-Hb}(\lambda))$$

ou toute combinaison linéaire des mêmes termes, dans laquelle $p_1$ et $p_2$ représentent des proportions totales et relatives de formes de l'hémoglobine, respectivement, et le paramètre $p_3$ représente la proportion de mélanine.

6. Procédé selon l'une quelconque des revendications précédentes, dans lequel le cube de données analysé (x, y, $\lambda$) est obtenu par imagerie spectrale.

7. Procédé selon la revendication 6, dans lequel l'imagerie spectrale est effectuée par une caméra hyperspectrale, une caméra CCD ou une caméra CMOS.

8. Procédé selon l'une quelconque des revendications 1 à 3, dans lequel le cube de données analysé (x, y, $\lambda$) est obtenu par un dispositif de balayage.

9. Procédé selon l'une quelconque des revendications précédentes, dans lequel au moins l'une des composantes spectrales signées positivement est associée à un émetteur autre que la lipofuscine, tel que le tryptophane, la phénylalanine, la tyrosine, le NADPH, la flavine, la rétine, le collagène, l'élastine, la lutéine et la zéaxanthine ou tout autre émetteur qui émet dans la plage de longueurs d'onde de 510 nm à 590 nm.

10. Procédé selon l'une quelconque des revendications précédentes, dans lequel les valeurs de paramètres $p_2$ et $p_3$ sont multipliées par un filtre passe-haut, tel que sous la forme d'$\exp(-(p_2 t/p_2)^2)$, où $p_2 t$ est une valeur seuil.

11. Procédé selon l'une quelconque des revendications précédentes, dans lequel, après l'étape d'obtention d'informations spatiales concernant les paramètres $\lambda_{max}$ ou $p_3$, $p_1$ et $p_2$, les données obtenues sont codées en couleur.

12. Procédé selon l'une quelconque des revendications précédentes, l'étape spectrale étant de 10 nm ou moins, de préférence de 5 nm ou moins.

13. Unité de traitement pour un appareil ophtalmique, l'unité de traitement étant prévue pour lire le cube de données (x, y, $\lambda$), pour transformer ce cube de données (x, y, $\lambda$) en série de densités spectrales et pour traiter ces dernières en cartes selon les revendications 1 à 12.

14. Appareil ophtalmique comprenant :

- un système d'excitation de source de lumière avec les longueurs d'onde dans la plage visuelle entre 350 nm et 550 nm et dans l'infrarouge proche entre 700 nm et 1100 nm,
- un système de distribution effectuant soit une imagerie soit un balayage ;
- un système de détection qui acquiert le cube de données (x, y, $\lambda$),
- l'unité de traitement selon la revendication 13,
- une unité d'affichage, qui affiche les cartes telles que des cartes des hémoglobines.

**15.** Utilisation de l'unité de traitement selon la revendication 13 ou de l'appareil ophtalmique selon la revendication 14, en ophtalmologie.

**A**

tissue

excitation system → delivery system

standard ophthalmic system

detection system

Intensity dispay unit

**B**

tissue

excitation system → delivery system

spectrally sensitive ophthalmic system

spectrally sensitive detection system

Intensity display unit with spectral coding ability

**C**

tissue

excitation system → delivery system

system according to the invention

spectrally sensitive detection system

Intensity display unit with molecular map display ability

microspectral processing unit

Figure 1

EP 3 755 994 B1

Figure 2

Figure 3

Figure 4a

Figure 4b

Figure 5

Figure 6

Figure 7a

Figure 7b

Figure 7c

microspectral processing unit $=$ Reading (x, y, λ) datacube → Transforming (x, y,λ) datacube into series of spectral density functions → Processing spectral density functions into maps

Figure 8

EP 3 755 994 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6276798 B
- US 2016106311 A
- CA 2951075
- WO 2013109966 A1

### Non-patent literature cited in the description

- **SCHWEITZER et al.** *Microsc. Res. Tech.,* 2007, vol. 70 (5), 410-419
- **ELDRED et al.** *Science,* 1982, vol. 216 (4547), 757-759
- **ELDRED ; KATZ.** *Exp Eye Res,* 1988, vol. 47 (1), 71-86
- **SOHAL ; BRUNK.** *Adv Exp Med Biol.,* 1989, vol. 266, 17-26
- **DELORI.** *Invest. Ophthalmol. Vis. Sci.,* 1995, vol. 36 (3), 718-729
- **CAMPOCHIARO.** *J Mol Med.,* 2013, vol. 91 (3), 311-321
- **SCHMIDT-ERFURTH et al.** *Br. J. Ophthalmol.,* 2014, vol. 98 (9), 1144-1167
- **FRAMPTON et al.** *Health Technol Assess.,* 2016, vol. 20 (31), 1-108
- **FRAMPTON et al.** *Eye,* 2017
- **CHALAM et al.** *J Ophthalmic Vis Res.,* 2016, vol. 11, 84-92
- **DYSLI et al.** *Prog. Ret. Eye Res.,* 2017, vol. 60, 120-143
- **KALUZNY et al.** *Current Eye Research,* 2017, vol. 42, 629-635
- *Biomed. Opt. Express,* 2011, vol. 2, 2083-2095
- **SCHWEITZER.** *Microsc. Res. Tech.,* 2007, vol. 70, 410-419
- *Opt. Express,* 2013, vol. 21, 25291-25306
- **ARSOV et al.** *Biomed. Opt. Express,* 2011, vol. 2, 2083-2095